(19)

**Europäisches Patentamt**
**European Patent Office**
**Office européen des brevets**

(11) **EP 4 753 157 A1**

(12) **EUROPEAN PATENT APPLICATION**

(43) Date of publication:
**03.06.2026 Bulletin 2026/23**

(21) Application number: **24216508.2**

(22) Date of filing: **29.11.2024**

(51) International Patent Classification (IPC):
***H04B 1/28*** *(2006.01)*

(52) Cooperative Patent Classification (CPC):
**H04B 1/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **van de Beek, Remco Cornelis Herman**
**5656 AG Eindhoven (NL)**

• **van Sinderen, Jan**
**5656 AG Eindhoven (NL)**

(74) Representative: **Krott, Michel**
**NXP Semiconductors**
**Intellectual Property Group**
**High Tech Campus 60**
**5656 AG  Eindhoven (NL)**

Remarks:
Amended claims in accordance with Rule 137(2) EPC.

(54) **TEST TONE GENERATOR AND METHOD THEREFOR**

(57)     A test tone generator (467) for a receiver (356) comprises a dual-modulus divider circuit (415) arranged to receive a local oscillator, LO (367), and generate a tone therefrom in a series of pulses (417) at an offset frequency from the LO signal; at least one counter (420) connected to an output of the dual-modulus divider circuit and arranged to count a number of pulses (417) and reset the dual-modulus divider circuit when a count threshold is reached. A tone shaping circuit (430) converts the series of pulses into an output test tone (432) The dual-modulus divider circuit (415) and tone shaping circuit in combination are arranged to generate a test tone from the series of pulses at an offset frequency from the LO signal, that does not contain frequency content at an image frequency.

FIG. 4

EP 4 753 157 A1

**Description**

Technical Field

The technical field relates to a test tone generator, a wireless communication unit and a method for test tone generation for testing a receiver. The described examples are applicable to, but not limited to, a test tone generator and a method for limiting content at an image frequency of a built-in self-test receiver.

Background

In radio frequency (RF) technologies and systems, wireless communication units typically include transceivers, i.e., a transmitter that generates and transmits a RF signal and a receiver that receives (and processes) a RF signal. In the receiver, an incoming RF signal is sometimes converted into a more manageable intermediate frequency (IF) for further processing (or converted directly to baseband for digital signal processing). However, during this conversion to an IF signal, a potential for interference from unwanted signals exists, often referred to as image frequencies. An image frequency ($f_{image}$) is an unwanted frequency that can mix with a receiver's local oscillator (LO) signal in such a way that it produces the same intermediate frequency (IF) as the desired signal (having a frequency $f_{desired}$). This can lead to confusion following the processing of signals in the receiver, as it may misinterpret the unwanted image frequency as the actual signal. Thus, in RF technologies and systems, image frequency rejection is critical for improving signal quality.

The frequency of such an undesired image signal can be calculated using the relationship:

IF

$$f_{desired} = f_{LO} + f_{IF} \qquad \text{THEN} \qquad f_{image} = f_{LO} - f_{IF} \qquad [1]$$

or
IF

$$f_{desired} = f_{LO} - f_{IF} \qquad \text{THEN} \qquad f_{image} = f_{LO} + f_{IF} \qquad [2]$$

In order to combat image interference, engineers implement various techniques, typically one or more of the following:

(i) Radio Frequency (RF) filters designed to attenuate unwanted image frequencies before they reach the mixing stage.
(ii) Correct local oscillator (LO) Frequency Selection: By carefully selecting the LO frequency, engineers can ensure that image frequencies are far enough away from the desired signal to minimize interference and facilitate the above mentioned RF filtering before the mixer.
(iii) Quadrature Mixers for down-converting the RF input signals to a complex IF signal, which allows to differentiate between image and desired signals now having negative and positive frequencies at IF.
(iv) Image rejection IF filters: designed to suppress the unwanted frequency components after the quadrature mixing process. The image rejection filters can be implemented with analog circuitry at the quadrature mixer output. It is also possible to implement an image rejection filter in a digital manner, located after analog-to-digital conversion of the quadrature output signal of the mixer.

For so called zero-IF receivers the LO frequency is equal (or almost equal) to the centre frequency of the desired RF signal. A zero-IF receiver uses a quadrature mixer for down-converting the desired RF signal and the resulting negative and positive IF components are now both desired. It is needed to differentiate between the negative and positive IF components in order not to disturb the wanted signal quality.

In a practical quadrature receiver, the amount of image rejection or differentiation between negative and positive IF signals is often limited by analog imperfections, such as, for example, mismatch, which causes phase and amplitude errors in the quadrature LO and IF signals. As a consequence of these imperfections, negative (or image) IF frequency components are partly converted towards positive (or desired) IF frequencies or vice versa.

By generating a test tone at the image frequency $f_{image}$, it is possible to observe how well the receiver is able to reject the image signal, or differentiate between negative and positive IF frequency components. If the image rejection can be measured then it can also be potentially improved via a trimming or calibration procedure.

It is known that in order to reduce the test cost of an integrated circuit (IC) that contains a wireless receiver, it is desirable to remove the need for an external RF tone generator during receiver testing by generating a test tone inside the IC under test itself, allowing a so-called built-in self-test (BIST) to be performed. Such a BIST test tone also enables the calibration of the receiver during operation in the field. For example, the temperature drift of performance parameters can be monitored and countered. Depending on the test/calibration that is performed, there are some demands on the quality of the BIST test tone itself.

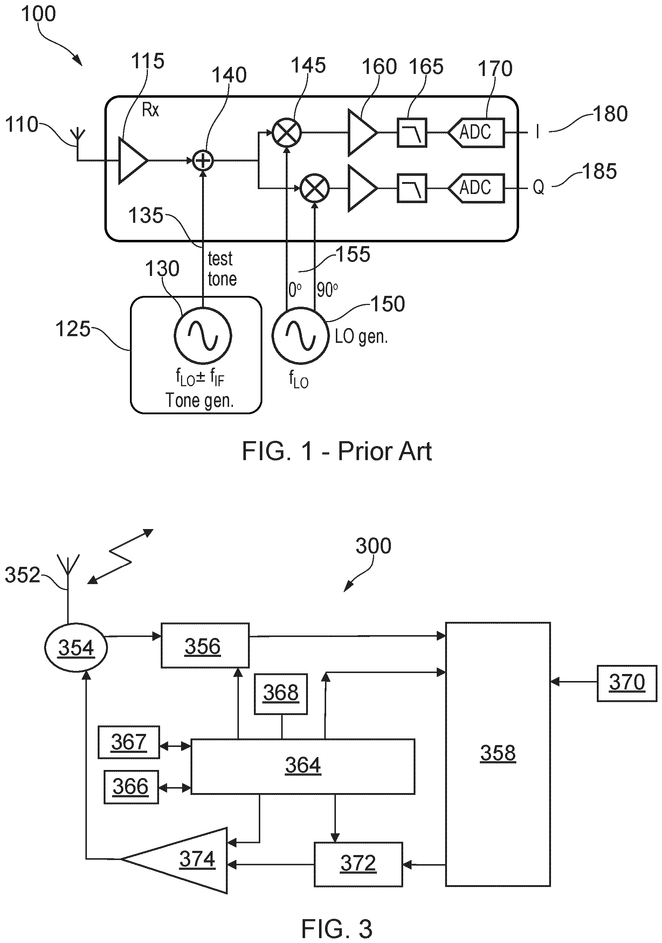

An example of a known test tone generator 125 to measure the image rejection performance of a known low-IF receiver 100 is illustrated in FIG. 1. The known low-IF receiver 100 includes an antenna 110, coupled to a low noise amplifier 115 that receives and amplifies a received wireless signal and applies an amplified received signal to summer 140. Summer 140 adds the test tone 135 (from test tone generator 125 that includes a local oscillator 130 that generates the test tone) at $f_{LO} \pm f_{IF}$, with the amplified received signal. The combined output from summer 140 is input to quadrature down-conversion mixers 145, fed by quadrature signals 155 generated by a local oscillator (LO) generation circuit 150. The quadrature baseband mixers 145 then output down-converted quadrature signals to be amplified in baseband amplifiers 160, filtered in low-pass baseband filters 165 and digitized in analog-to-digital converters (ADCs) 170 to provide quadrature outputs 'I' 180 and 'Q' 185.

In this manner, in a dedicated test mode, a BIST test tone generator 125 creates a test tone 135 that is offset by the receiver's intermediate frequency $f_{IF}$ compared to the local oscillator (LO) frequency $f_{LO}$, generated by the LO generation circuit 150 say, at $f_{LO} - f_{IF}$. When injected into the receiver before the quadrature down-conversion mixers 145 (when operating in the dedicated test mode), the receiver would produce a tone at the quadrature ('I' & 'Q') outputs 180, 185 of, say, $-f_{IF}$ as a result of down-converting the test tone signal with the quadrature LO signals. Note that treating the combined 'I' and 'Q' signal as a complex signal, for example I + jQ, allows distinguishing positive and negative frequencies.

A receiver with perfect image rejection performance would <u>not</u> produce a signal at $+f_{IF}$, whereas a receiver with finite image rejection performance *would* create this undesirable signal component at the frequency $+f_{IF}$. It is known that measuring this undesired frequency component allows testing and/or adjusting (e.g., trimming or calibrating) the receiver's image rejection performance by say, changing the frequency generated and/or adjusting filter parameters. An example of adjusting the IQ imbalance in the filter after the down-conversion mixer is found in: M. Notten, M. Bernard, V. Rambeau and J. van Sinderen, "A CMOS quadrature down-conversion mixer with analog I/Q correction obtaining 55 dB of image rejection for TV on mobile applications," IEEE Radio Frequency Integrated Circuits (RFIC) Symposium, 2006.

Furthermore, let us consider a test tone generator that itself has an unwanted frequency component at $f_{LO} + f_{IF}$ in this example when referred to the down-converter input and assuming the wanted test tone is at $f_{LO} - f_{IF}$. Now, even a receiver with perfect image rejection performance would produce a quadrature output frequency component at $+f_{IF}$ as a result of down-converting the unwanted component out of the imperfect test-tone generator 125. Therefore, the test-tone generator itself should be clean enough to allow it to be used for the test/calibration under consideration. Using a dedicated frequency synthesizer, for example a phase locked loop (PLL), to produce an accurate test-tone (without an image component) would typically generate a tone at the receiver image frequency and not at the desired receiver frequency. However, such a solution is known to be costly in terms of chip area consumption

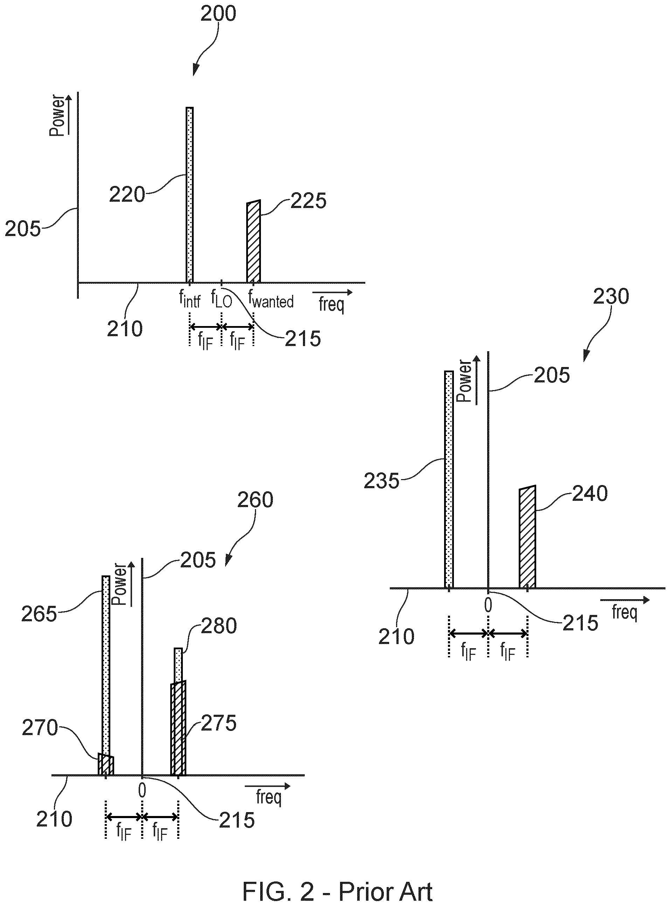

Referring now to FIG. 2, three example spectral plots of a receiver are illustrated highlighting a need to provide good image rejection in the receiver, typically as a consequence of a presence of strong interfering signals (often referred to as 'blockers'). The spectral plots illustrate frequency 210 versus power 205 for a wanted signal 225, 240, 275 at $f_{wanted}$ in a presence of a strong interference signal 220, 235, 265 at an image frequency (around a local oscillator frequency 215). A first example spectral plot 200 is measured at the antenna with the wanted signal 225 at $f_{wanted}$ in a presence of a strong interference signal 220, at an image frequency; a second spectral plot 230 is measured at the receiver output with the wanted signal 240 at $f_{wanted}$ in a presence of a strong interference signal 235 at an image frequency, and a third spectral plot 260 is measured at the receiver output (after quadrature down-conversion and some filtering) with the wanted signal 275 at $f_{wanted}$ in a presence of a strong interference signal 265 at an image frequency, which translates to $f_{wanted}$ after mixing/down-conversion, and when image rejection is imperfect. Thus, as illustrated, the receiver is unable to recover the wanted signal 275 due to the presence of the strong interfering signal at an image frequency that causes an overlap 280 between the strong interference signal (i.e., blocker) and the wanted signal.

US4468797A and US4264863A describe a known implementation of a swallow counter for use in a phase locked loop (PLL) feedback circuit. Accordingly, there is a need for a receiver and test system and a method for a receiver, particularly one with a test-tone generator, that uses a quadrature down-conversion mixer and cancels or substantially reduces/rejects an image frequency signal, for example when the receiver outputs a quadrature (I & Q or complex) signal.

<u>Summary</u>

Examples herein described provide a test tone generator for a receiver and a wireless communication unit with a test tone generator and a method for test tone generation in a receiver, for example one that uses a quadrature down-conversion mixer, in order to cancel or substantially reduce an image frequency signal when the receiver outputs a quadrature (I & Q or complex) signal, as described in the accompanying claims. Specific examples are set forth in the dependent claims. These and other aspects will be apparent from and elucidated with reference to the example embodiments described hereinafter.

Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates an example of a known receiver combined with a test tone generator.

FIG. 2 illustrates three known example spectral plots of a receiver when image rejection is imperfect: a first example spectral plot at the antenna; a second spectral plot at the receiver output, and a third spectral plot at the receiver output (after down-conversion and some filtering).

FIG. 3 illustrates a block diagram of a wireless radio frequency communication unit, adapted in accordance with some examples.

FIG. 4 illustrates one example of a proposed tone generator with a receiver under test using a first modulation control circuit, according to some examples.

FIG. 5 illustrates one example of a proposed tone generator with a receiver under test using a second modulation control circuit, according to some examples.

FIG. 6 illustrates two example spectral plots of a receiver: a first example spectral plot measured at the receiver output with excellent image rejection; and a second spectral plot measured at the receiver with 1° phase error in local oscillator (LO) signals, according to some examples.

FIG. 7 illustrates a flowchart for tone generation with a receiver under test according to some examples.

Detailed description

Generally, a phase locked loop (PLL) circuit is used to generate a test-tone at $f_{LO}$ +/- $f_{IF}$ in a receiver to test its image rejection performance. However, examples herein-described adopt a different strategy to test and reject image frequencies that uses a dual-modulus divider circuit, which in some examples is a dual-modulus divider circuit as a tone generator and a method for generating a tone accordingly. The test-tone is generated at an exact offset frequency from a receiver's local oscillator (LO), without containing frequency content at the desired receiver frequency, such that it can be used in built-in self-test of the receiver's image rejection performance. In examples described herein, the dual-modulus divider circuit is fully digital in nature and therefore its circuit area and power consumption are considerably lower than that of a PLL. In examples described herein, a receiver with quadrature reception is used in order to allow separation of the wanted signal and its image in the first place, such that positive and negative frequencies may be obtained to identify the image signal.

In some examples, one or more of the aforementioned problems may be alleviated using an approach to generate a tone at substantially an exact offset frequency from a receiver's local oscillator (LO), without containing frequency content at the desired receiver frequency, such that it can be used in a built-in self-test of the receiver's image rejection performance (e.g., for subsequent trim and/or calibration purposes to reduce or remove any image frequency that is generated in the receiver). In some examples, the concepts may be used with a quadrature down-conversion mixer, arranged to output a quadrature (I & Q or complex) signal, where the concept is applicable for use with any zero-intermediate frequency (IF) receiver or low-IF receiver. In some examples, the required dual-modulus divider circuit for the tone generator is digital in nature (rather than the dual-modulus divider circuit being used in an analog tone generator circuit with a PLL closed around a free-running LO) and its area and power consumption are considerably lower than that of prior art.

Referring now to FIG. 3, a high-level block diagram of a wireless radio frequency communication unit 300 is illustrated that contains an antenna 352, for receiving transmissions, coupled to an antenna switch or duplexer 354 that provides isolation between receive and transmit chains within the wireless radio frequency communication unit 300. One or more receiver chains, as known in the art, include receiver front-end circuitry 356 (effectively providing reception, filtering and intermediate or base-band frequency conversion). The receiver front-end circuitry 356 is coupled to a signal processor 358 (generally realized by a digital signal processor (DSP)). A skilled artisan will appreciate that the level of integration of receiver circuits or components may be, in some instances, implementation-dependent.

The controller 364 maintains overall operational control of the wireless radio frequency communication unit 300. The controller 364 is also coupled to the receiver front-end circuitry 356 and the signal processor 358. In some examples, the controller 364 is also coupled to a frequency generation circuit that includes a local oscillator (LO) 367 and a memory device 366 that selectively stores operating regimes, such as decoding/encoding functions, synchronization patterns, code sequences, and the like. A timer 368 is operably coupled to the controller 364 to control the timing of operations (e.g., transmission or reception of time-dependent signals) within the wireless radio frequency communication unit 300.

As regards the transmit chain, this essentially includes an input interface 370, coupled in series through transmitter/modulation circuitry 372 and a power amplifier 374 to the antenna 352, antenna array, or plurality of antennas. The transmitter/ modulation circuitry 372 and the power amplifier 374 are operationally responsive to the controller 364. The signal processor 358 in the transmit chain may be implemented as distinct from the signal processor in the receive chain. Alternatively, a single processor may be used to implement a processing of both transmit and receive signals, as shown in FIG. 3. Clearly, the various components within the wireless radio frequency communication unit 300 can be realized in discrete or integrated component form, with an ultimate structure therefore being an application-specific or design selection.

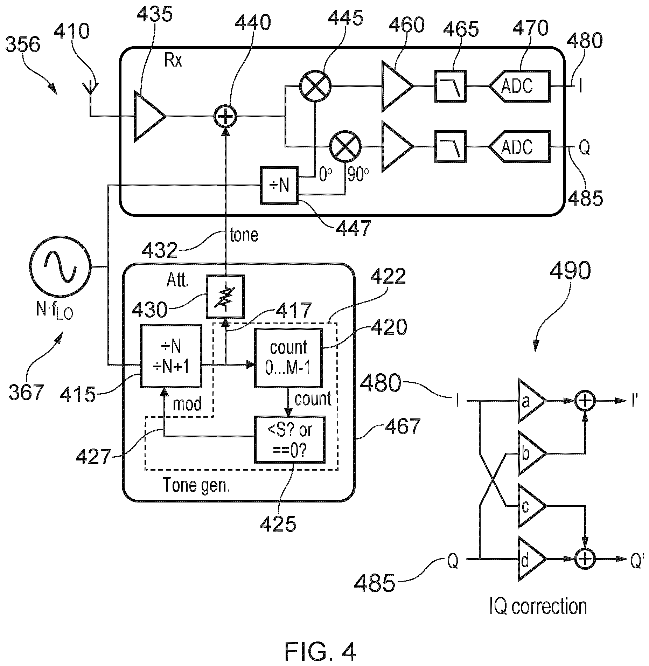

In accordance with examples described herein, the frequency generation circuit (with the LO 367) of the wireless radio frequency communication unit 300 is arranged to include a dual-modulus divider circuit and one or more counters and collaborate with the receiver front-end circuitry 356, in accordance with the approach described in at least one of: FIG. 4 or FIG. 5 or FIG. 7 or described hereafter. In particular, a tone generator within the frequency generation circuit (with the LO 367) is arranged to inject the output of the dual-modulus divider into a receiver radio frequency (RF) node, in order to measure and potentially correct image rejection performance of that receiver. In particular, the frequency generation circuit (with the LO 367) is arranged such that the dual-modulus divider is controlled by means of counters and dividers, such that the injected test-tone is free from spurious tones at the image frequency of the generated tone.

A first implementation of the test tone generator, which in some examples may form part of the frequency generation circuit (with the LO 367), is shown in FIG. 4, which additionally shows the receiver chain under test. In some examples, the hardware/circuitry used for the test tone generator core may be considered as being similar to a pulse swallowing frequency divider, which is built around a dual-modulus divider circuit and one or more counters, as also encountered in the feedback of PLLs, for example.

Referring now to FIG. 4, one example of a proposed tone generator in collaboration with a receiver under test using a first modulation control circuit 422 is illustrated, according to some examples, for example the receiver 356 of FIG. 3. In this example, the receiver 356 is described as encompassing antenna 410, for receiving signals/transmissions, The receiver 356 further includes a low noise amplifier 435 for amplifying received signals/transmissions, a RF summing node 440 for receiving a tone generated by a tone generation circuit 467, which in some examples is part of a frequency generation circuit, such as frequency generation circuit of FIG. 3 that includes a local oscillator 367. The receiver 356 further includes a quadrature down-mixer circuit 445 arranged to receive quadrature signals fed from the frequency generation circuit (with the LO 367) via a divider ('/N') 447, which quadrature down-converts to an intermediate or base-band frequency any signal appearing at RF summing node 440. The quadrature down-converted signals are input to amplifiers 460 for amplifying, which are then filtered in low-pass filters 465 and converted to digital form in analog-to-digital converters (ADCs) 470 and output as quadrature 'I' signal 480 and 'Q' signal 485 (or complex signals). A skilled artisan will appreciate that the level of integration of receiver circuits or components may be, in some instances, implementation-dependent.

In accordance with examples described herein, FIG. 4 further includes a tone generation circuit 467 that encompasses feedback divider circuitry and is fed with the LO signal from the frequency generation circuit 367. The LO signal is input to a dual-modulus divider circuit 415 coupled to a first modulation control circuit 422. In this example, the first modulation control circuit 422 comprises a program counter 420 (that is arranged in this example to count the pulses output 417 from dual-modulus divider circuit 415 from '0' to 'M-1' that provides the count (that acts as a reset) to a comparator 425, e.g., comparator 425 observes a state (e.g., value) of the program counter 420 and provides a binary output that indicates if the program count value is below some threshold value (or not). The first modulation control circuit 422 then outputs a modulation control signal 427 to the dual-modulus divider circuit 415. In this manner, it may be understood that dual-modulus divider circuit 415 outputs a square-wave-like signal that is used as the test tone. The program counter 420 is arranged to count a number of rising (for example) transitions of that square-wave-like signal. In this regard, it may be understood that the combination of the program counter 420 and comparator 425 configured in this way equates to a 'swallow counter' that decides whether dual-modulus divider circuit 415 is arranged to divide by 'N' or divide by 'N+1', thereby "swallowing" an additional input transition.

The program counter functions as a divider that has a constant modulus and once the count reaches a threshold it resets the comparator 425. The output signal ('mod') of the comparator 425 has a frequency that is 'M' times lower than the test tone frequency (output of dual-modulus divider circuit 415) because the program counter 420 requires 'M' rising input transitions before its state starts to repeat. The comparator 425 provides an output '1' (or higher (integer value in unity steps) in some alternative examples) when the count value is < a factor 'S', and '0' when it is not. Thus, in this manner, the output of the comparator 425 provides a modulus ('mod') control input signal 427 to the dual-modulus divider circuit 415. The dual-modulus divider circuit 415 also provides the output tone 432 to the RF summing node 440 via a tone 'shaping' circuit (e.g., which in some examples may be an attenuator) 430. The dual-modulus divider circuit 415 either divides its input frequency by a first ratio 'N' (when the mod input signal is '0') or by a second ratio 'N+1' (when the mod input signal is '1'). The tone generation circuit 467 is configured such that the dual-modulus divider circuit 415 divides by the second ratio (N+1) for 'S' times dictated by the comparator 425, then by the ratio 'N' for (M-S) times; and then this cycle repeats.

Although the above example is described with reference to a selection of either a 'divide by 'N' or a divide by 'N+1', it is envisaged that in other examples a different divide-by ratio may be adopted that uses the concepts described herein.

In order to control this cycle, in tone generation circuit 467 of FIG. 4, a combination of a counter and a comparator 425 is used. In other examples, the frequency dividing may be fixed, if flexibility in the exact tone frequency is not required.

Thus, a new combination of a programmable frequency divider with a tone 'shaping' circuit (which in some examples may be the illustrated attenuator) 430, inserts the generated tone 432 into a RF summing node 440 that allows a tone to be inserted without generating an image frequency of the LO signal. In some examples, as illustrated, a tone 'shaping' circuit 430 is employed as the digital signal output from the dual-modulus divider circuit 415, switching between 0V and the digital supply voltage, may be too high in amplitude to be properly processed by the mixer circuit. Thus, such a tone 'shaping' circuit 430 may take a form of an attenuator. Also, in some examples, the mixer circuit may require a current-like signal, rather than a voltage, at its input (high impedance output from the test-tone generator, rather than low impedance). Alternatively, in some examples, harsh transitions of the square-wave-like signal may need to be filtered, in which case the tone 'shaping' circuit 430 may take a form of a filter circuit. In this manner, an attenuated dual-modulus divider output signal 432 is injected into the RF portion of the receiver (via RF summing node 440) to be eventually down-converted by the receiver's (e.g., quadrature) down-mixer 445. In examples herein described, this specifically-generated tone (notably output from the dual-modulus divider 415 is arranged to only be injected into the receiver in a dedicated test mode, e.g., as part of a BIST function. Whereas, in normal operational receive mode, the tone generation circuit 467 is turned 'off' and is not injecting a tone into the receiver 356. In the tone generator application, the output of the dual-modulus divider circuit is the useful signal. This is in contrast to a known pulse swallow counter used as PLL feedback divider, where the output of the counter would be the useful signal.

In some examples, the input clock of the tone generation circuit 467 may be arranged to have a frequency that is an integer multiple of the receiver's LO frequency, say, $N \cdot f_{LO}$ of the frequency generation circuit 367, as shown. In this manner, the dual-modulus divider circuit 415 has first and second divider ratios of: N and N+1, and a divider 'N' is located between the receiver's LO and the receiver's (e.g., quadrature) down-mixer 445 to ensure that the subsequent processing in the receiver is at the correct baseband or IF frequency. In some examples, it is noted that the divider ratios of: 'N' and 'N+1' employed by the dual-modulus divider circuit 415 are configured to be '1' apart, in order to 'swallow' the least amount of input cycles). A scenario that adopts larger steps of the dual-modulus divider circuit 415 makes the output tone take larger phase jumps. As mentioned, the dual-modulus divider circuit 415 divides by (N+1) for S times, then by N for (M-S) times, and then this cycle repeats. The duration of one full cycle (until the state of the block repeats) is therefore:

$$T_{cycle} = \{S \cdot (N+1) + (M-S) \cdot N\} \cdot 1/f_{in} \qquad = (N \cdot M + S)/f_{in}. \qquad [3]$$

The frequency of the mod signal is the inverse of this cycle time:

$$f_{mod} = f_{in}/(N \cdot M + S) \qquad [4]$$

Since the input of the tone generation circuit 467 was set to be 'N' times the receiver's local oscillator $f_{LO}$, we can rewrite:

$$f_{mod} = f_{LO} \cdot N/(N \cdot M + S) \qquad [5]$$

The average input frequency of the counter (which is also the output of the dual-modulus divider circuit 415), and the output of the tone generation circuit 467) can be seen to be 'M' times higher than $f_{mod}$ (the counter can be viewed as a '/M' frequency divider, where in this description it is envisaged that a counter is a circuit whose internal state can be observed, whereas a divider would only produce an output clock edge after a certain number of input edges having occurred), Therefore:

$$f_{tone} = f_{LO} \cdot N \cdot M/(N \cdot M + S) \qquad [6]$$

Thus, the tone generation circuit 467 creates a frequency that is slightly lower than the receiver's LO frequency.

When injected into the receiver, and down-converted using $f_{LO}$, the quadrature down-converter output frequency is:

$$f_{IF} = f_{tone} - f_{LO} = f_{LO} \cdot \text{N·M/(N·M + S)} - f_{LO} = f_{LO} \cdot \{-\text{S/(N·M + S)}\} \qquad [7]$$

When using the tone generation circuit 467 to perform a BIST of the receiver's image rejection performance, the receiver output spectral content at this IF frequency may be compared to the spectral content at the image frequency. Referred to the receiver output, the image frequency equals:

$$f_{img,IF} = -f_{IF} = f_{LO} \cdot \text{S/(N·M + S)} \qquad [8]$$

Referred to the receiver input (at RF, before the (quadrature) down-conversion mixer 445), the image is located at:

$$f_{img} = f_{img,IF} + f_{LO} = f_{LO} \cdot \text{S/(N·M + S)} + f_{LO} = f_{LO} \cdot \text{(N·M + 2·S)/(N·M + S)} \qquad [9]$$

To be useful as a test tone for receiver image rejection measurement, the tone generation circuit 467 itself should not produce frequency content at this image frequency ($f_{img}$. As stated, the full state of the tone generation circuit 467 repeats with a cycle time of $T_{cycle} = \text{(N·M + S)}/f_{in}$. The spectral energy of any signal in the tone generation circuit 467, therefore, can only be located at integer multiples of the inverse of this cycle period (if we do not consider noise sources), so at integer multiples of: $f_{mod} = f_{LO} \cdot \text{N/(N·M + S)}$.

We are interested to know for which choices of 'M', 'N' and 'S' the image frequency cannot be an integer multiple of the cycle frequency, such that the tone generated by the tone generation circuit 467 is image-free by design. Therefore, in order to determine when $f_{img} / f_{mod}$ is a non-integer let us consider:

$$f_{img} / f_{mod} = \{f_{LO} \cdot \text{(N·M + 2·S)/(N·M + S)}\} / \{f_{LO} \cdot \text{N/(N·M + S)}\} = \text{M + 2·S/N} \qquad [10]$$

Since 'M' itself is an integer, **'2·S/N'** is needed to be **non-integer** for an image-free-by-design tone generated by the tone generation circuit 467.

Often, low-IF receivers make use of a frequency divide-by-4 to generate the 90° out-of-phase LO signals, so the input frequency of that divider is $4 \cdot f_{LO}$ (N=4). In that example, 2S/N = 2S/4 = S/2, so any odd value of 'S' will satisfy the design requirement, S=1 being the trivial choice. Thus, it has been identified that, in general and according to some examples, choosing S=1 for the tone generation circuit 467 will lead to non-integer values of 2S/N = 2/N, as long as N > 2.

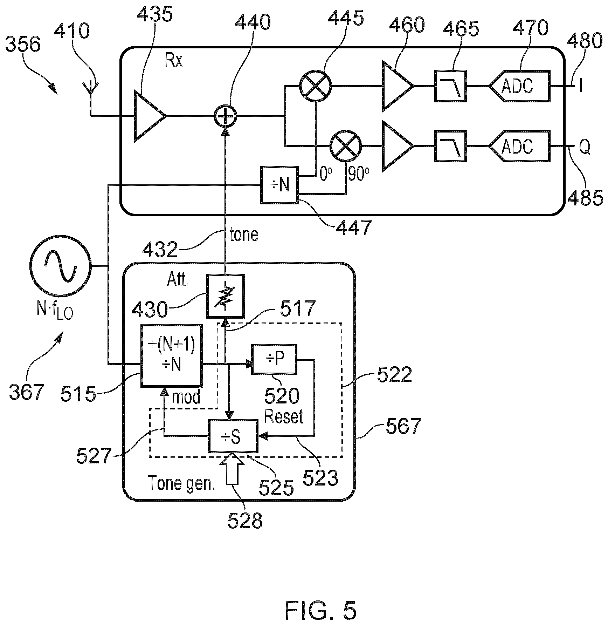

Referring now to FIG. 5, one example of a proposed tone generator circuit 567 with a receiver under test using a second modulation control circuit is illustrated, according to some examples. The proposed tone generator with a receiver under test using a second modulation control circuit operates substantially as described with respect to the above description of FIG. 4, other than the following alternative approaches. The corresponding description of FIG. 4 is not repeated here purely for the purpose of not obfuscating the description of this example.

The proposed tone generator circuit 567 encompasses feedback divider circuitry and is fed with the LO signal from the frequency generation circuit 367. The LO signal is again input to a dual-modulus divider circuit 515 coupled to a second modulation control circuit 522. In this example, the second modulation control circuit 522 comprises a program counter (in this example a divide-by-'P' circuit) 520 (that is arranged in this example to count the pulses output 517 from dual-modulus divider circuit 515 from '0' to 'M-1' that provides the count (that acts as a reset 523) to a swallow counter 525. In this manner, it may be understood that dual-modulus divider circuit 415 outputs a square-wave-like signal that is used as the test tone. The program counter 520 is arranged to count a number of rising (for example) transitions of that square-wave-like signal. In this regard, it may be understood that the combination of the program counter 520 and swallow counter 525 decides whether dual-modulus divider circuit 415 is arranged to divide by 'N' or divide by 'N+1', thereby "swallowing" an additional input transition.

The program counter functions as a divider that has a constant modulus and once the count reaches a threshold it resets the swallow counter 525. The output signal ('mod') of the swallow counter 525 has a frequency that is 'P' times lower than the test tone frequency (output of dual-modulus divider circuit 515) because the program counter 520 requires 'P' rising input transitions before its state starts to repeat. The swallow counter 525 of the second modulation control circuit 522 then provides an output '1' (or higher (integer value in unity steps) in some alternative examples) or a '0' as a modulus ('mod') control input signal 527 to the dual-modulus divider circuit 515. In this proposed tone generator circuit 567 the output of dual-modulus divider circuit 515 provides the output tone 517 to the tone shaping circuit, e.g., attenuator 430, which in turn provides a shaped tone 432 to the RF summing node 440. The dual-modulus divider circuit 515 either divides its input frequency by a first ratio 'N' (when the mod input signal is '0') or by a second ratio 'N+1' (when the mod input signal is '1'). The tone generation circuit 567 is configured such that the dual-modulus divider circuit 515 divides by the second ratio (N+1) for 'S' times dictated by the swallow counter 525, then by the ratio 'N' for (P-S) times; and then this cycle repeats.

Although the above example is described with reference to a selection of either a 'divide by 'N' or a divide by 'N+1', it is envisaged that in other examples a different divide-by ratio may be adopted that uses the concepts described herein.

This referenced approach would perform the same function as examples described with respect to FIG. 4, e.g., making the dual modulus divider 515 divide by 'N+1' 'S' times, and by 'N' 'P-S' times (with 'P' in this approach of FIG. 5 being equivalent to 'M' in the examples described with respect to FIG. 4).

Whichever circuit arrangement is adopted, the resulting modulus signal 427 or 527 and, therefore, the output of the dual-modulus divider circuit 415 or 515, are identical. In some examples described herein, the frequency dividing may be programmably controlled with a with a digital control signal to program the value of 'M' (or in FIG. 5 digital control signal 528 to program the value 'S'), using for example the controller 364 in FIG. 3 (connected to the test-tone generator 567 of FIG. 5). In other examples, the frequency dividing may be fixed, if flexibility in the exact tone frequency is not required.

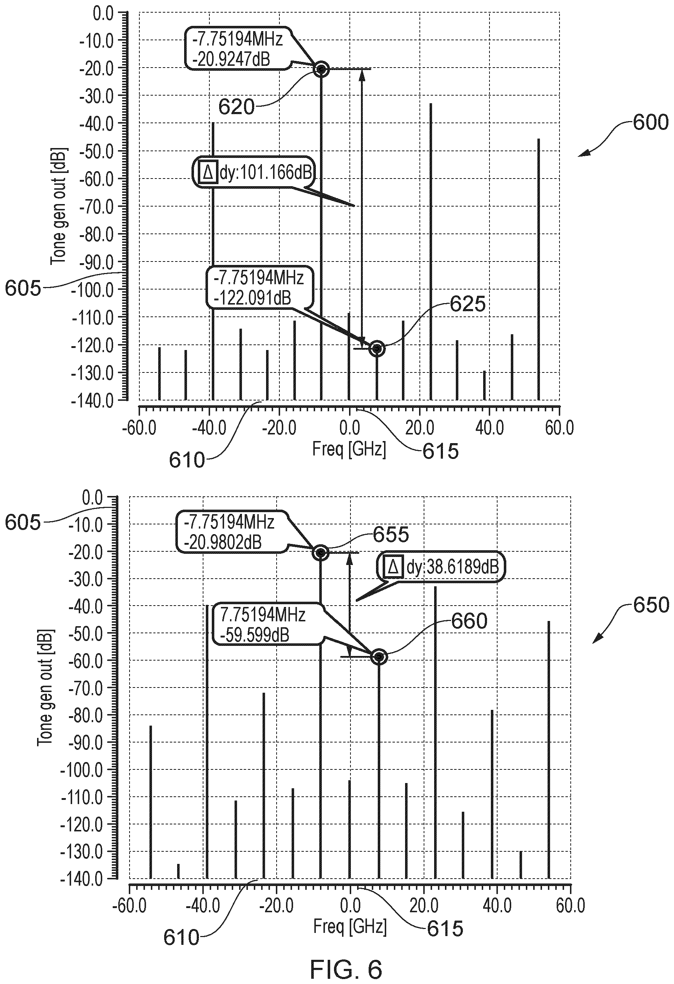

Referring now to FIG. 6, two example spectral plots of a receiver are illustrated, a first example spectral plot 600 measured at the receiver output with excellent image rejection; and a second spectral plot 650 measured at the receiver with a deliberately injected 1° phase error in local oscillator (LO) signals, according to some examples. Here, the tone generator output signal is injected into the receiver's down-conversion/mixer circuit. In order to measure the receiver's image rejection performance, its I and Q outputs are observed. The spectral plots illustrate frequency 610 versus power 605 for a wanted signal 620, 655 at $f_{wanted}$ in a presence of an interference signal 625, 660 at an image frequency (around a local oscillator frequency 615).

Thus, the response to the tone generator signal is at -7.75 MHz, and the image signal is at +7.75 MHz. It can be seen that without introducing a receiver phase error (see first example spectral plot 600), the receiver output at the image frequency is clean. This means that the tone generator itself, e.g., tone generation circuit 467 of FIG. 4, is not polluting the spectrum at this frequency of interest. However, if a phase error is introduced in the receiver's LO signals, there clearly is energy content at the image frequency of +7.75 MHz (see image frequency signal 660 in second spectral plot 650). By observing this energy content, the image rejection performance of the receiver can be measured, and potentially improved by adjusting receiver parameters (e.g., amplifier levels, filtering characteristics, etc.) such that the image energy at 660 is minimized.

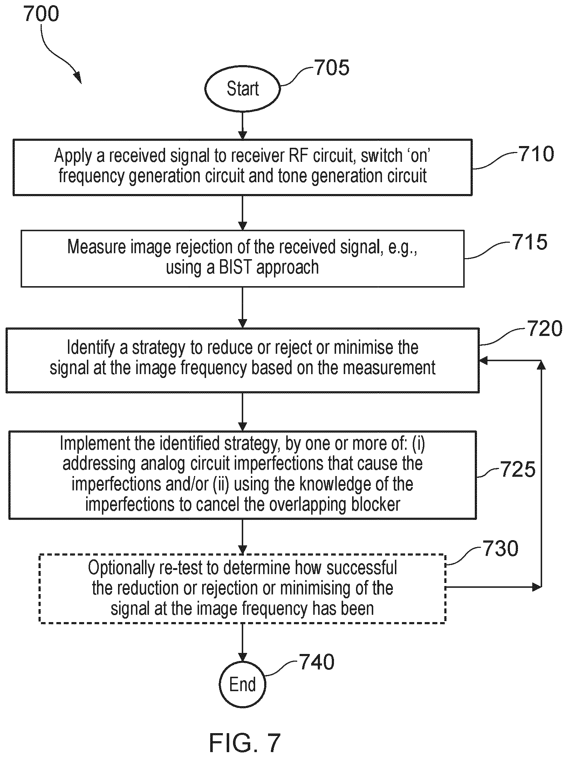

FIG. 7 illustrates a flowchart 700 for generating a tone for a receiver, for example a receiver that is undergoing tests, according to some examples. The flowchart 700 starts at 705 and, at 710, a received signal is applied to a receiver RF circuit, and a frequency generation circuit and tone generation circuit are switched 'on'. A first operation in correcting the image rejection performance is to find out how imperfect it is to begin with. Therefore, at 715, the flowchart includes measuring the image rejection performance of the received signal (for example possibly with a BIST). A second operation is to correct the performance, using known techniques. Here, at 720, the flowchart includes identifying a strategy to reduce or reject or minimise the signal at the image frequency based on the measurement.

At 725, it is envisaged that corrections may be performed in one or more ways, for example: addressing the analog imperfections that cause the imperfections to begin with (such as the LO phases not being separated by 90 degrees exactly for example, which can be addressed by allowing to tune the phase difference between the LO lines in some analog way, e.g. some tunable delay). In other examples, it is envisaged that imperfections in the gain stages after the mixer, which may have mismatched gain and result in imperfect image rejection, may be addressed, such that for example the 'I'-signal experiences higher gain than the 'Q'-signal. Otherwise, the cause of imperfections may be left as is, and alternatively (or additionally) instead, the knowledge of the imperfections may be used to cancel the overlapping blocker after the fact, for example in the receiver's DSP. In one example, and referring back to FIG. 4, this may be achieved by adding an I-Q correction circuit 490, in the digital domain (after the ADC 470), to cancel the overlapping blocker. Here, if the receiver image rejection was already perfect, the controller (say controller 364 of FIG. 3) may choose a = d = 1, and b = c = 0. Alternatively, if image rejection was not perfect the controller may choose different values in order to exactly invert (e.g., cancel) the receiver's imperfections (such as LO phase imbalance, gain errors, etc.). In the signal chain that would create a blocker image with the same magnitude but opposite phase (sign) as the overlapping blocker image. This method requires the original blocker (i.e., the one at -f_if in FIG. 5) to still be present at the input of the cancellation block, and thereby to allow this recreation of a blocker with an opposite sign. Thereafter, optionally at 730, a re-test may be performed to determine how successful the reduction or rejection or minimising of the signal at the image frequency has been, or check that the image rejection performed at 725 was successful. The flowchart then ends at 740.

In this manner, in a tone generation circuit incorporated into a wireless communication unit, for example for use as a built-in self-test (BIST), a mechanism for injecting an output of a dual-modulus divider into a receiver RF node, in order to measure and potentially correct image rejection performance of that receiver is provided. In some examples, the dual-modulus divider may be controlled by means of counters and/or dividers, such that the injected tone is free from spurious tones at the image frequency of the generated tone. Notably, this approach is very different to the approaches taught in US4468797A and US4264863A, which describe an implementation of a swallow counter for use in a phase locked loop (PLL) feedback circuit, whereby the output signal is not that of the dual-modulus divider, and it is not injected into a receiver.

In the foregoing specification, examples have been described with reference to specific example embodiments. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one example embodiment, the illustrated examples may be implemented as circuitry located on a single integrated circuit or within a same device.

In some examples, the various components within the test-tone generation unit can be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts described herein and in order not to obfuscate or distract from the teachings described herein. A skilled artisan will appreciate that the level of integration of the test-tone generation unit or circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the examples described herein are not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A test tone generator (467) for a receiver (356) that comprises a local oscillator, LO (367), the test tone generator (467) comprising:

an input arranged to receive a local oscillator, LO (367), input signal;

a dual-modulus divider circuit (415, 515) arranged to receive the LO input signal and generate a tone therefrom in a series of pulses (417, 517) at an offset frequency from the LO signal;

a modulation control circuit (422, 522) connected to an output of the dual-modulus divider circuit (415, 515) and arranged to provide a modulation control signal to the dual-modulus divider circuit (415, 515);

a tone shaping circuit (430) having an input connected to the output of the dual-modulus divider circuit (415, 515) or an output of the modulation control circuit (422, 522) and arranged to convert the series of pulses (417) into an output test tone (432); and

an output connected to an output of the tone shaping circuit (430);

wherein the dual-modulus divider circuit (415) and tone shaping circuit (430) in combination are arranged to generate a test tone from the series of pulses (417) at an offset frequency from the LO signal, that does not contain frequency content at an image frequency.

2. The test tone generator (467) of Claim 1 wherein the modulation control circuit (422) comprises:

at least one counter (420) connected to the output of the dual-modulus divider circuit (415) wherein the at least one counter (420) is arranged to count a number of pulses (417); and

a comparator (425) coupled to an output of the at least one counter (420) and an input of the dual-modulus divider circuit (415) that acts as a feedback path to the dual-modulus divider circuit (415), wherein the comparator (425) is arranged to reset the dual-modulus divider circuit (415) when a count threshold is reached.

3. The test tone generator (467) of Claim 2 wherein the at least one counter (420) comprises a program counter (420) that has a constant modulus and once the count reaches the threshold the program counter (420) resets the comparator (425).

4. The test tone generator (567) of Claim 1 wherein the modulation control circuit (522) comprises:

a program counter (520) connected to the output of the dual-modulus divider circuit (515) wherein the program counter (520) is arranged to count a number of pulses (517); and

a swallow counter (525) coupled to an output of the program counter (520) and an input of the dual-modulus divider circuit (515) that acts as a feedback path to the dual-modulus divider circuit (515), wherein the swallow counter (525) is arranged to provide the modulus control input signal (527) to the dual-modulus divider circuit (515)

5. The test tone generator (467, 567) of any preceding Claim wherein the dual-modulus divider circuit (415) is arranged to selectively divide the LO input signal by either: a first ratio 'N', a second ratio 'N+1', in response to a modulus input signal provided by the at least one counter (420).

6. The test tone generator (467) of Claim 5 when dependent upon Claim 2, wherein the dual-modulus divider circuit (415) is arranged to divide the LO input signal by the second ratio 'N+1' for 'S' times set by the comparator (425), then divide the LO input signal by 'N' for 'M-S' times, when the count threshold is 'M-1'.

7. The test tone generator (467) of Claim 6 wherein a cycle of the dual-modulus divider circuit (415) being arranged to divide the LO input signal by the second ratio 'N+1' for 'S' times set by the comparator (425), then divide the LO input signal by 'N' for 'M-S' times is arranged to repeat.

8. The test tone generator (467) of any preceding Claim wherein the tone shaping circuit (430) comprises at least one of: an attenuator, a filter circuit.

9. The test tone generator (467) of any preceding Claim wherein the test tone generator (467) is arranged to perform a built-in self-test of the receiver's image rejection performance.

10. The test tone generator (467) of any preceding Claim further comprising a controller (364) operably coupled to the receiver and arranged to identify an image frequency reduction strategy in response to the test tone generator (467) injecting a test tone into the receiver, wherein the image frequency reduction strategy includes one or more of: (i) correct analog circuit imperfections that cause at least one identified imperfection in the receiver; (ii) use knowledge of the at least one identified imperfection obtained from an image frequency measurement to cancel an overlapping blocker.

**11.** A method (700) for test tone generation for testing a receiver, the method (600) comprising:

receiving a local oscillator, LO (367), input signal at by a dual-modulus divider circuit (415) in a test tone generator (467, 567);

generating a series of pulses (417, 517) at an offset frequency from the LO signal by the dual-modulus divider circuit (415, 515);

counting a number of the pulses (417, 517) and resetting the dual-modulus divider circuit (415, 515) when a count threshold is reached;

converting the series of pulses (417, 517) into an output test tone (432) at an offset frequency from the LO signal wherein the offset frequency is equal to a receiver image frequency under test, that does not contain frequency content at a desired receiver frequency or at other image frequencies that are not under test, by a tone shaping circuit (430) connected to an output of the dual-modulus divider circuit (415); and

outputting the test tone (432) to the receiver.

**12.** The method (700) for test tone generation of Claim 11, wherein counting a number of the pulses (417, 517) and resetting the dual-modulus divider circuit (415) when a count threshold is reached is performed by a program counter (420) connected to a comparator (425) that acts as a feedback path to the dual-modulus divider circuit (415), wherein the method further comprises outputting a constant modulus by the program counter (420) and once the count reaches the threshold resetting the comparator (425).

**13.** The method (700) for test tone generation of Claim 12, further comprising selectively dividing, by the dual-modulus divider circuit (415, 515), the LO input signal by either: a first ratio 'N', a second ratio 'N+1', in response to a modulus input signal provided by the at least one counter (420).

**14.** The method (700) for test tone generation of Claim 13, wherein selectively dividing, by the dual-modulus divider circuit (415, 515), the LO input signal comprises:

dividing the LO input signal by a second ratio 'N+1' for 'S' times set by the comparator (425); and
then dividing the LO input signal by 'N' for 'M-S' times, when a count threshold is 'M-1'.

**15.** A wireless communication unit (300) comprising the test tone generator circuit of any of preceding Claims 1 to 10.

**Amended claims in accordance with Rule 137(2) EPC.**

**1.** A test tone generator (467) for a receiver (356) that comprises a local oscillator, LO (367), the test tone generator (467) comprising:

an input arranged to receive a local oscillator, LO (367), input signal;
a dual-modulus divider circuit (415, 515) arranged to receive the LO input signal and generate a tone therefrom in a series of pulses (417, 517) at an offset frequency from the LO input signal;
a modulation control circuit (422, 522) connected to an output of the dual-modulus divider circuit (415, 515) and arranged to provide a modulation control signal to the dual-modulus divider circuit (415, 515), wherein the modulation control circuit (422, 522) comprises at least one counter (420) connected to the output of the dual-modulus divider circuit (415) and arranged to count a number of pulses (417); and a comparator (425) coupled to an output of the at least one counter (420) and an input of the dual-modulus divider circuit (415) that acts as a feedback path to the dual-modulus divider circuit (415), wherein the comparator (425) is arranged to reset the dual-modulus divider circuit (415) when a count threshold is reached;
a tone shaping circuit (430) having an input connected to the output of the dual-modulus divider circuit (415, 515) and arranged to convert the series of pulses (417) into an output test tone (432); and
an output connected to an output of the tone shaping circuit (430);
wherein the dual-modulus divider circuit (415) and tone shaping circuit (430) in combination are arranged to generate a test tone from the series of pulses (417) at an offset frequency from the LO input signal, where the generated test tone does not contain frequency content at an image frequency of the LO input signal.

**2.** The test tone generator (467) of Claim 1 wherein the at least one counter (420) comprises a program counter (420) that has a constant modulus and once the count reaches the threshold the program counter (420) resets the comparator (425).

3. The test tone generator (567) of Claim 1 wherein the modulation control circuit (522) comprises:

   a program counter (520) connected to the output of the dual-modulus divider circuit (515) wherein the program counter (520) is arranged to count a number of pulses (517); and
   a swallow counter (525) coupled to an output of the program counter (520) and an input of the dual-modulus divider circuit (515) that acts as a feedback path to the dual-modulus divider circuit (515), wherein the swallow counter (525) is arranged to provide the modulus control input signal (527) to the dual-modulus divider circuit (515)

4. The test tone generator (467, 567) of any preceding Claim wherein the dual-modulus divider circuit (415) is arranged to selectively divide the LO input signal by either: a first ratio 'N', a second ratio 'N+1', in response to a modulus input signal provided by the at least one counter (420).

5. The test tone generator (467) of Claim 4, wherein the dual-modulus divider circuit (415) is arranged to divide the LO input signal by the second ratio 'N+1' for 'S' times set by the comparator (425), then divide the LO input signal by 'N' for 'M-S' times, when the count threshold is 'M-1'.

6. The test tone generator (467) of Claim 5 wherein a cycle of the dual-modulus divider circuit (415) being arranged to divide the LO input signal by the second ratio 'N+1' for 'S' times set by the comparator (425), then divide the LO input signal by 'N' for 'M-S' times is arranged to repeat.

7. The test tone generator (467) of any preceding Claim wherein the tone shaping circuit (430) comprises at least one of: an attenuator, a filter circuit.

8. The test tone generator (467) of any preceding Claim wherein the test tone generator (467) is arranged to perform a built-in self-test of the receiver's image rejection performance.

9. The test tone generator (467) of any preceding Claim further comprising a controller (364) operably coupled to the receiver and arranged to identify an image frequency reduction strategy in response to the test tone generator (467) injecting a test tone into the receiver, wherein the image frequency reduction strategy includes one or more of: (i) correct analog circuit imperfections that cause at least one identified imperfection in the receiver; (ii) use knowledge of the at least one identified imperfection obtained from an image frequency measurement to cancel an overlapping blocker.

10. A method (700) for test tone generation for testing a receiver, the method (600) comprising:

    receiving a local oscillator, LO (367), input signal at by a dual-modulus divider circuit (415) in a test tone generator (467, 567);
    generating a tone in a series of pulses (417, 517) at an offset frequency from the LO input signal by the dual-modulus divider circuit (415, 515);
    providing a modulation control signal to the dual-modulus divider circuit (415, 515) by a modulation control circuit (422, 522) connected to an output of the dual-modulus divider circuit (415, 515);
    counting a number of the pulses (417, 517) and resetting the dual-modulus divider circuit (415, 515) when a count threshold is reached;
    converting the series of pulses (417, 517) into an output test tone (432) at an offset frequency from the LO input signal wherein the offset frequency is equal to a receiver image frequency under test, where the generated test tone does not contain frequency content at image frequencies of the LO input signal that are not under test, by a tone shaping circuit (430) connected to an output of the dual-modulus divider circuit (415); and
    outputting the test tone (432) to the receiver.

11. The method (700) for test tone generation of Claim 10, wherein counting a number of the pulses (417, 517) and resetting the dual-modulus divider circuit (415) when a count threshold is reached is performed by a program counter (420) connected to a comparator (425) that acts as a feedback path to the dual-modulus divider circuit (415), wherein the method further comprises outputting a constant modulus by the program counter (420) and once the count reaches the threshold resetting the comparator (425).

12. The method (700) for test tone generation of Claim 11, further comprising selectively dividing, by the dual-modulus divider circuit (415, 515), the LO input signal by either: a first ratio 'N', a second ratio 'N+1', in response to a modulus input signal provided by the at least one counter (420).

13. The method (700) for test tone generation of Claim 12, wherein selectively dividing, by the dual-modulus divider circuit (415, 515), the LO input signal comprises:

dividing the LO input signal by a second ratio 'N+1' for 'S' times set by the comparator (425); and
then dividing the LO input signal by 'N' for 'M-S' times, when a count threshold is 'M-1'.

14. A wireless communication unit (300) comprising the test tone generator circuit of any of preceding Claims 1 to 9.

FIG. 1 - Prior Art

FIG. 3

FIG. 2 - Prior Art

FIG. 4

FIG. 5

FIG. 6

700

Start — 705

Apply a received signal to receiver RF circuit, switch 'on' frequency generation circuit and tone generation circuit — 710

Measure image rejection of the received signal, e.g., using a BIST approach — 715

Identify a strategy to reduce or reject or minimise the signal at the image frequency based on the measurement — 720

Implement the identified strategy, by one or more of: (i) addressing analog circuit imperfections that cause the imperfections and/or (ii) using the knowledge of the imperfections to cancel the overlapping blocker — 725

Optionally re-test to determine how successful the reduction or rejection or minimising of the signal at the image frequency has been — 730

End — 740

FIG. 7

Europäisches
Patentamt

European
Patent Office

Office européen
des brevets

# EUROPEAN SEARCH REPORT

**Application Number**

EP 24 21 6508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/291883 A1 (WELZ JARED [US] ET AL) 20 December 2007 (2007-12-20) * paragraphs [0077] - [0091]; claim 1; figures 6-7 * | 1-15 | INV. H04B1/28 |
| A | US 9 319 027 B1 (RAFI ASLAMALI A [US]) 19 April 2016 (2016-04-19) * column 3, line 24 - column 6, line 29; claims 1-3; figures 1, 2A, 2B * | 1-15 | |
| A | US 2006/128338 A1 (KERTH DONALD A [US] ET AL) 15 June 2006 (2006-06-15) * paragraphs [0018] - [0027]; figure 1 * | 1-15 | |

**TECHNICAL FIELDS SEARCHED (IPC)**

H04B

The present search report has been drawn up for all claims

| Place of search | Date of completion of the search | Examiner |
|---|---|---|
| Munich | 14 April 2025 | Ciccarese, Corrado |

EPO FORM 1503 03.82 (P04C01)

## ANNEX TO THE EUROPEAN SEARCH REPORT
## ON EUROPEAN PATENT APPLICATION NO.

EP 24 21 6508

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2007291883 A1 | 20-12-2007 | NONE | |
| US 9319027 B1 | 19-04-2016 | CN 105721005 A | 29-06-2016 |
| | | DE 102015014194 A1 | 23-06-2016 |
| | | US 9319027 B1 | 19-04-2016 |
| US 2006128338 A1 | 15-06-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4468797 A

- US 4264863 A

**Non-patent literature cited in the description**

- **M. NOTTEN ; M. BERNARD ; V. RAMBEAU ; J. VAN SINDEREN**. A CMOS quadrature down-conversion mixer with analog I/Q correction obtaining 55 dB of image rejection for TV on mobile applications. *IEEE Radio Frequency Integrated Circuits (RFIC) Symposium*, 2006